(19) Europäisches Patentamt
European Patent Office
Office européen des brevets

(11) **EP 2 137 801 B1**

(12) **FASCICULE DE BREVET EUROPEEN**

(45) Date de publication et mention
de la délivrance du brevet:
**07.11.2018 Bulletin 2018/45**

(51) Int Cl.:
*H02J 7/00* ^(2006.01)    *H01M 10/44* ^(2006.01)
*H01M 10/48* ^(2006.01)    *B60L 11/18* ^(2006.01)
*B60L 3/06* ^(2006.01)    *H01M 10/42* ^(2006.01)

(21) Numéro de dépôt: **08788132.2**

(22) Date de dépôt: **07.04.2008**

(86) Numéro de dépôt international:
**PCT/FR2008/050609**

(87) Numéro de publication internationale:
**WO 2008/139103 (20.11.2008 Gazette 2008/47)**

(54) **DISPOSITIF DE STOCKAGE D'ENERGIE, NOTAMMENT POUR VEHICULE AUTOMOBILE**

STROMSPEICHERUNGSVORRICHTUNG, INSBESONDERE FÜR EIN KRAFTFAHRZEUG

ENERGY STORAGE DEVICE, PARTICULARLY FOR AN AUTOMOBILE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **18.04.2007 FR 0754534**
**10.12.2007 FR 0759684**
**06.02.2008 FR 0850761**

(43) Date de publication de la demande:
**30.12.2009 Bulletin 2009/53**

(73) Titulaire: **Valeo Equipements Electriques Moteur 94046 Créteil Cedex (FR)**

(72) Inventeurs:
• **SARDAT, Pierre**
**F-93340 Le Raincy (FR)**
• **MATT, Jean-Claude**
**F-Dijon 21000 (FR)**
• **DOFFIN, Hugues**
**F-92290 Chatenay Malabry (FR)**
• **DESSIRIER, Bruno**
**F-78100 Saint Germain En Laye (FR)**

(74) Mandataire: **de Lambilly Delorme, Marie Pierre**
**Valéo Equipements Electriques Moteur**
**Propriété Industrielle**
**2, rue André-Boulle**
**94046 Créteil Cedex (FR)**

(56) Documents cités:
| | |
|---|---|
| US-A- 5 594 320 | US-A- 5 644 212 |
| US-A- 5 814 970 | US-A- 5 869 950 |
| US-A- 6 150 795 | US-A1- 2002 190 692 |
| US-A1- 2006 119 319 | US-A1- 2006 214 636 |
| US-B1- 6 624 612 | US-B1- 6 771 045 |

EP 2 137 801 B1

## Description

L'invention concerne un dispositif de stockage d'énergie comportant un ensemble de cellules de stockage d'énergie disposées en série.

L'invention s'applique notamment au domaine des véhicules automobiles, le dispositif de stockage d'énergie étant par exemple agencé pour être chargé lors d'une phase de freinage récupératif et déchargé lors de phases de démarrage et d'accélération du véhicule.

D'une manière générale, pour une chaîne de cellules de stockage d'énergie connectées en série, ces cellules comportant par exemple chacune un super- condensateur, des différences de tension de charge peuvent apparaître entre les cellules du fait :

- de différences entre les valeurs de capacité inhérentes à la fabrication des cellules,
- de l'existence de courants de fuite d'intensités différentes.

La persistance de ces écarts dans le temps peut provoquer le vieillissement accéléré, voire la destruction, des cellules qui supportent des tensions de charge les plus élevées.

Différentes méthodes sont proposées pour corriger ces déséquilibres.

On connaît par exemple par la demande de brevet US 2003/0214267 un système de stockage d'énergie comportant une chaîne de cellules, par exemple capacitives, assemblées en série. Ce système comprend, pour chaque cellule, un circuit d'équilibrage pour équilibrer les courants de fuite associés aux cellules. Ce circuit d'équilibrage est formé par une résistance et une diode. Cette demande US 2003/0214267 décrit également un circuit d'équilibrage incorporant un amplificateur opérationnel.

On connaît par ailleurs par le brevet US 5 659 237 un dispositif pour équilibrer la charge au sein d'une chaîne de cellules de stockage d'énergie connectées en série. Ce dispositif comprend un transformateur de type flyback permettant, à chaque cycle de commutation d'un transistor MOSFET, de transférer une certaine quantité d'énergie aux cellules de la chaîne qui présentent les plus basses tensions. Ce dispositif prélève l'énergie à transférer, sur un chargeur qui est lui-même relié à une source de courant alternatif.

La demande de brevet US 2005/0269988 décrit un dispositif de stockage d'énergie permettant un équilibrage à deux niveaux, à savoir intra-modulaire et inter-modulaire.

Le brevet US 6 771 045 décrit un dispositif pour charger en puissance et équilibrer des packs de batteries en utilisant un processeur.

Le brevet US 6 150 795 décrit un équilibrage en charge de batteries à l'aide d'un transformateur à deux enroulements primaire et secondaire. Ces enroulements présentent le même nombre de tours.

Le brevet US 5 594 320 décrit un équilibrage de la charge sur des cellules en utilisant un transformateur comprenant des enroulements au nombre égal au nombre de cellules.

La présente invention vise notamment à améliorer encore l'équilibrage de cellules de stockage d'énergie connectées en série.

L'invention a ainsi pour objet un dispositif de stockage d'énergie pour véhicule automobile tel qu'il est défini dans les revendications jointes.

L'invention pourra être mieux comprise à la lecture de la description détaillée qui va suivre, d'exemples de mise en oeuvre non limitatifs de l'invention, et à l'examen du dessin annexé, sur lequel :

- la figure 1 représente, schématiquement et partiellement, un dispositif de stockage d'énergie conforme à un exemple de mise en oeuvre de l'invention,
- la figure 2 illustre différentes étapes successives d'équilibrage de deux cellules du dispositif de la figure 1,
- la figure 3 représente, schématiquement et partiellement, une modification d'une portion du dispositif de la figure 1,
- la figure 4 illustre différentes étapes successives d'équilibrage de deux cellules du dispositif de la figure 3,
- la figure 5 représente, schématiquement et partiellement, un dispositif de stockage d'énergie conforme à un autre exemple de mise en oeuvre de l'invention,
- la figure 6 représente, schématiquement et partiellement, un dispositif de stockage d'énergie conforme à un autre exemple qui ne fait pas partie de l'invention,
- la figure 7 est un graphe illustrant schématiquement la variation de la tension aux bornes de l'ensemble des cellules de la figure 6, en fonction du temps,
- la figure 8 représente, schématiquement et partiellement, un module de décharge accélérée du dispositif de la figure 6,
- les figures 9 à 11 sont des schémas blocs illustrant différents dispositifs selon des exemples de mise en oeuvre de l'invention,
- la figure 12 est un graphe avec des courbes de courant de fuite en fonction de la température, et
- la figure 13 représente l'évolution du courant Ip en fonction du temps, ainsi que celle des signaux de réveil de l'équilibrage.

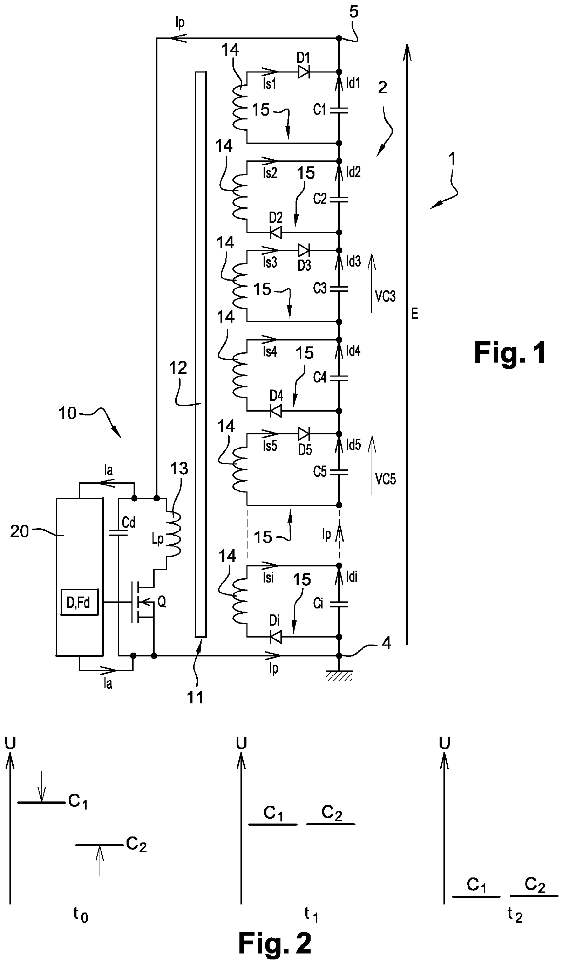

On a représenté sur la figure 1 un dispositif de stockage d'énergie 1 conforme à l'invention, comportant un ensemble 2 de cellules de stockage d'énergie C1, C2, ... Ci connectées en série. Le nombre de cellules Ci est par exemple égal à 10.

Dans l'exemple considéré, chaque cellule C1, C2, ... Ci est formée par un unique super-condensateur.

Le dispositif 1 est agencé pour être utilisé dans un véhicule automobile, en étant chargé lors d'une phase de freinage récupératif et déchargé lors de phases de démarrage et/ou d'accélération du véhicule.

L'ensemble 2 comprend deux bornes extérieures 4 et 5 dont l'une 4 est reliée à une masse, par exemple.

La tension aux bornes 4 et 5 de l'ensemble 2 est notée E, celle aux bornes de chaque cellule Ci est notée Vci.

Ip désigne le courant circulant entre les bornes 4 et 5 de l'ensemble 2.

On appelle Idi un courant de décharge associé à chaque cellule Ci.

Le dispositif 1 comporte un circuit d'équilibrage 10 agencé pour permettre le prélèvement d'énergie sur au moins une des cellules C1, C2, ... Ci et distribuer de l'énergie ainsi prélevée vers au moins une autre desdites cellules.

Dans l'exemple décrit, le circuit d'équilibrage 10 est agencé pour permettre, lors d'une phase de décharge du dispositif 1, d'accroître la tension de charge de l'une au moins des cellules C1, C2, ... Ci uniquement avec de l'énergie prélevée sur l'une au moins des autres cellules de stockage d'énergie.

Le circuit d'équilibrage 10 comporte un transformateur de type flyback 11 pourvu d'un noyau 12, d'un bobinage primaire 13 d'inductance Lp et de bobinages secondaires 14.

Le bobinage primaire 13 est monté en série avec un interrupteur Q formé par un transistor.

Dans l'exemple considéré, le transistor Q est un transistor MOSFET avec un drain relié au bobinage primaire 13 et une source reliée à la borne 4.

Le bobinage primaire 13 et l'interrupteur Q sont connectés aux bornes extérieures 4 et 5 de l'ensemble 2.

Chaque bobinage secondaire 14 fait partie d'une boucle 15 connectée aux bornes d'une cellule Ci de l'ensemble 2.

Chaque boucle 15 comporte une diode Di en série avec le bobinage secondaire 14, cette boucle 15 étant traversée par un courant d'équilibrage Isi.

Un condensateur Cd de découplage est monté en parallèle avec le bobinage primaire 13 et l'interrupteur Q.

Le dispositif 1 comprend un oscillateur 20 permettant de générer un signal transmis à la grille du transistor Q pour commuter ce transistor Q.

Dans l'exemple considéré, le signal produit par l'oscillateur 20 est du type rectangulaire avec un rapport cyclique D sélectionné de manière à générer un courant de sortie total (somme des courants Isi) dépendant de la tension E aux bornes de l'ensemble 2.

La fréquence Fd du signal généré par l'oscillateur 20 est contrôlée en fonction d'une température mesurée au niveau de l'ensemble 2.

La mesure de la température est réalisée par exemple à l'aide d'un capteur de température monté au sein de l'ensemble 2.

Dans l'exemple considéré, l'oscillateur 20 est alimenté par un courant Ia prélevé aux bornes du bobinage 13 et de l'interrupteur Q.

L'oscillateur 20 est par exemple agencé pour fonctionner de manière autonome entre 2V et 30V.

Dans une variante non illustrée, l'oscillateur 20 peut être alimenté par une source d'alimentation extérieure au dispositif 1.

Une valeur approchée du courant d'équilibrage Isi est donnée par l'expression :

$$ Isi \approx \frac{(E.D)^2}{Lp.Fd.(E + k.Vd)} $$

où k est le nombre de cellules Ci dans l'ensemble 2 et Vd une tension de déchet des diodes Di.

Une valeur approchée du courant de décharge Idi est donnée par l'expression (hors oscillateur 20 et fuites des cellules Ci) :

$$ Idi \approx Isi.\left( \frac{k.Vd}{E} \right) $$

On va maintenant décrire en référence à la figure 2 différentes étapes successives d'équilibrage de deux cellules C1 et C2 de l'ensemble 2.

On suppose qu'à l'instant t0 la tension aux bornes de la cellule C1 est supérieure à la tension aux bornes de la cellule C2. Autrement dit, la cellule C1 est plus chargée que la cellule C2.

L'équilibrage des cellules C1 et C2 s'effectue grâce au circuit d'équilibrage 10 par un prélèvement d'énergie aux bornes de l'ensemble 2 puis de l'énergie ainsi prélevée est distribuée par le transformateur 11, via le bobinage primaire 13 et les bobinages secondaires 14, aux cellules les moins chargées, par exemple à la cellule C2.

Ainsi, entre les instants t0 et t1, la tension aux bornes de la cellule C1 diminue et celle aux bornes de la cellule C2 augmente jusqu'à atteindre sensiblement le même niveau de charge que la cellule C1.

Puis, entre t1 et t2, les cellules C1 et C2 se déchargent sensiblement à la même vitesse pour atteindre un niveau de décharge sensiblement identique, par exemple proche de 0.2V pour chaque cellule, dans le cas d'une décharge profonde.

Le circuit d'équilibrage 10 permet ainsi de compenser des différences entre des courants de fuite des cellules de stockage d'énergie Ci tout en accompagnant une décharge naturelle de l'ensemble 2 des cellules par apport d'énergie aux cellules dont la tension de charge est la plus basse, ce qui assure un équilibrage automatique en décharge.

Lorsque l'ensemble 2 est à l'équilibre, les courants de décharge Idi sont sensiblement identiques, aux courants de fuite des cellules Ci près, et sont proportionnels aux pertes du circuit d'équilibrage 10 et de l'oscillateur 20.

L'essentiel des pertes du circuit d'équilibrage 10 provient des diodes Di compte tenu des tensions de déchet Vd.

Dans l'exemple qui vient d'être décrit, l'équilibrage des cellules Ci est réalisé en phase de décharge sans nécessiter d'énergie provenant d'une source d'énergie autre que les cellules.

La décharge des cellules Ci peut ainsi être, le cas échéant, relativement poussée.

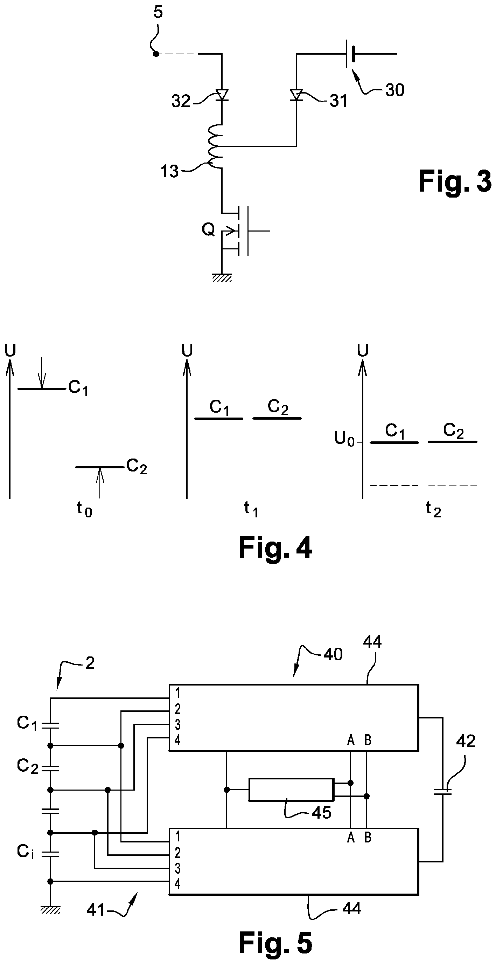

En variante, comme illustré sur la figure 3, le circuit d'équilibrage 10 peut être agencé pour être alimenté par une source d'énergie extérieure, par exemple une batterie 30.

Cette batterie 30 est reliée au bobinage primaire 13 avec interposition d'une diode 31.

Une diode 32 peut être prévue en série avec le bobinage primaire 13.

Dans l'exemple de la figure 3, l'équilibrage des cellules Ci est sensiblement identique à l'exemple précédent (voir figure 4 entre t0 et t1).

Toutefois, dans l'exemple de la figure 3, la tension de charge des cellules C1 et C2 est maintenue à un niveau prédéterminé Uo par apport d'énergie depuis la batterie 30, comme l'indique le diagramme pour l'instant t2 sur la figure 4.

Dans les exemples qui viennent d'être décrits, le circuit d'équilibrage 10 est agencé de manière à ce que l'énergie prélevée sur l'une au moins des cellules Ci soit stockée sous forme d'énergie inductive avant d'être transférée à une ou plusieurs autres cellules.

On a représenté sur la figure 5 un dispositif de stockage d'énergie 40 comportant un ensemble 2 de cellules de stockage d'énergie Ci analogue à celui décrit en référence à la figure 1, et un circuit d'équilibrage 41 agencé de manière à ce que l'énergie prélevée sur l'une au moins des cellules Ci est stockée sous forme d'énergie capacitive avant d'être transférée à une ou plusieurs cellules.

A cet effet, le circuit d'équilibrage 41 comporte un condensateur 42 relié à l'ensemble 2 des cellules Ci via deux multiplexeurs 44, notamment de type analogique.

Ces multiplexeurs 44 peuvent, le cas échéant, être alimentés par un courant prélevé sur les cellules Ci. Les multiplexeurs 44 peuvent ainsi être de type flottant.

Les multiplexeurs 44 sont connectés à un oscillateur 45 agencé de manière à ce que lorsqu'il est en marche, les multiplexeurs 44 prélèvent de l'énergie sur l'une des cellules Ci pour recharger le condensateur 42.

Puis les multiplexeurs 44 distribuent l'énergie stockée dans le condensateur 42 à l'une ou plusieurs cellules Ci la ou les plus déchargée(s).

Dans une variante non illustrée, il est possible de connecter une inductance en série avec le condensateur 42 de manière à limiter les impulsions de courant ou à permettre un équilibrage plus efficace en se servant de la résonance du circuit LC.

Le dispositif 40 peut, le cas échéant, être intégré dans un circuit intégré ou Asic (*Application-Specific Integrated Circuit*).

Le dispositif 40 peut, le cas échéant, comporter un système de diagnostic (non représenté) permettant de déterminer des écarts de tension entre les cellules Ci et/ou déterminer la tension maximale aux bornes de chaque cellule, notamment en vue de faire un diagnostic de santé des cellules.

Le diagnostic du dispositif 40 peut, si on le souhaite, être réalisé par cycles, par exemple de quelques minutes par jour lorsque le véhicule est à l'arrêt, et en permanence lorsque le véhicule fonctionne, ce qui permet de limiter la consommation d'énergie en fonction du diagnostic.

Bien entendu, l'invention n'est pas limitée aux exemples de mise en oeuvre qui viennent d'être décrits.

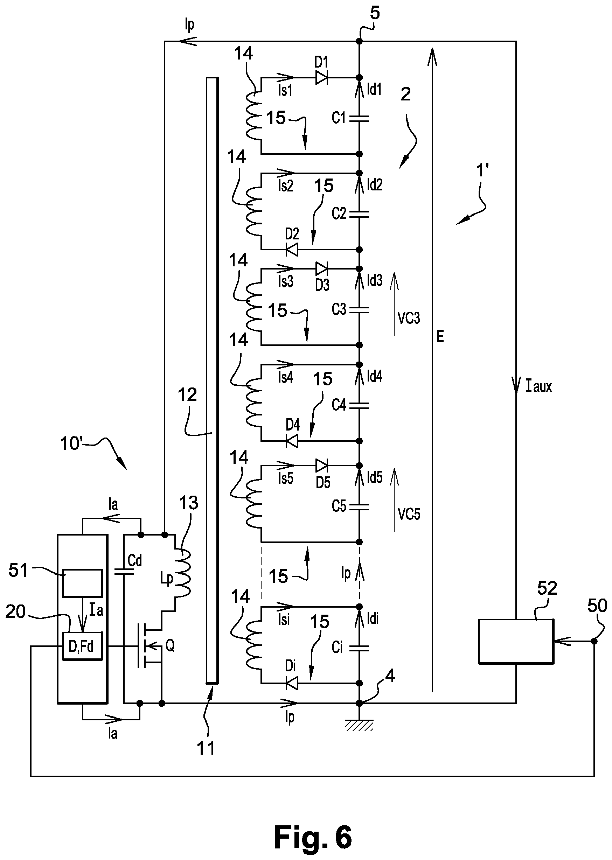

On a représenté sur la figure 6 un dispositif de stockage d'énergie 1' selon un exemple de mise en oeuvre qui ne fait pas partie de l'invention.

Ce dispositif 1' est analogue au dispositif 1 précédemment décrit, à l'exception du circuit d'équilibrage.

Le circuit d'équilibrage 10' du dispositif 1' comporte un oscillateur 20, un module d'alimentation électrique auxiliaire 51 pour l'alimentation de l'oscillateur 20, et un module de décharge accélérée 52 relié à l'oscillateur 20 au point 50.

Le module 52 est relié aux bornes 4 et 5 de l'ensemble de cellules 2 et est parcouru par un courant laux.

Le circuit d'équilibrage 10' est agencé pour permettre, dans une première phase Ph1, une décharge et un équilibrage des cellules Ci jusqu'à un seuil bas prédéterminé Einf de tension aux bornes des cellules de stockage d'énergie et, dans une deuxième phase Ph2 qui suit la première phase Ph1, une décharge accélérée des cellules en dessous dudit seuil bas prédéterminé Einf.

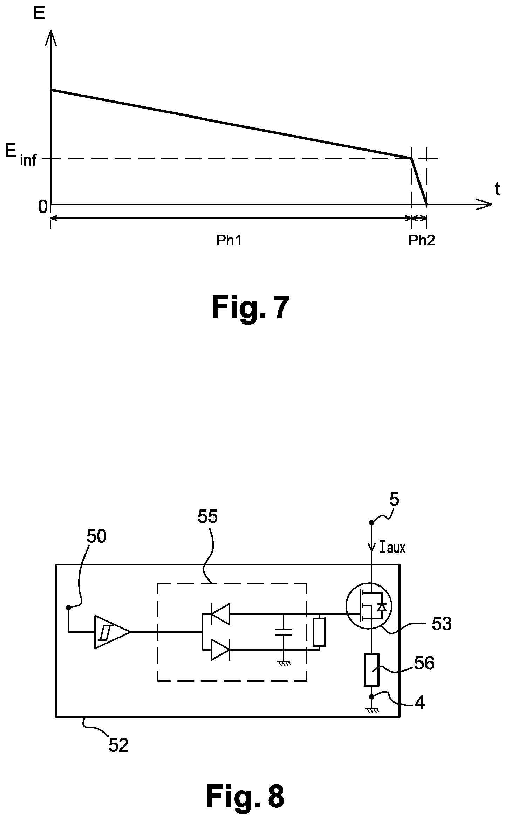

La variation de la tension E aux bornes 4 et 5 de l'ensemble de cellules 2 dans les phases Ph1 et Ph2 est représentée sur la figure 7.

Le profil de la variation de la tension E peut être plus ou moins rectiligne.

La phase Ph1 peut durer par exemple plusieurs jours ou semaines correspondant par exemple à une longue période de parking du véhicule, et la phase Ph2 quelques heures, par exemple deux heures environ.

Le seuil bas Einf est compris, dans l'exemple décrit, entre 1.5 et 2 Volts.

Le circuit d'équilibrage 10' est agencé de manière à ce qu'à l'issue de la deuxième phase Ph2, la tension E aux bornes des cellules est sensiblement nulle.

Durant la première phase Ph1, la décharge peut être lente de sorte que, lorsque le dispositif est laissé au repos sur une période relativement longue, les cellules Ci se déchargent le moins possible afin de limiter les pertes d'énergie.

Cette décharge dans la phase Ph1 s'accompagne de l'équilibrage des cellules Ci de la manière décrite en référence à la figure 1, à l'aide du transformateur 11 et de son système de commande.

En variante, l'équilibrage accompagnant la décharge des cellules Ci peut être réalisé de toute autre manière appropriée, par exemple à l'aide de multiplexeurs.

Durant la première phase Ph1, le courant Iaux est nul.

Durant la deuxième phase Ph2, lorsque la tension passe en dessous du seuil bas prédéterminé Einf, et devient insuffisante pour permettre un équilibrage des cellules, le circuit d'équilibrage 10' commande une décharge accélérée des cellules Ci, à l'aide d'un courant de décharge Iaux des cellules qui présente une intensité plus élevée que celle des courants de décharge dans les cellules lors de la première phase Ph1.

La décharge rapide des cellules dans la deuxième phase Ph2, grâce à ce courant de décharge fort Iaux, assure que toutes les cellules de l'ensemble atteignent une décharge complète, jusqu'à sensiblement 0 Volt, dans un laps de temps beaucoup plus court que celui de la première phase Ph1.

La décharge rapide imposée durant la deuxième phase Ph2 permet de décharger complètement les cellules Ci avant qu'un déséquilibre apparaisse entre ces cellules.

Lorsque les cellules Ci sont de nouveau chargées par une source d'énergie extérieure, par exemple à partir d'un convertisseur DC/DC dans un véhicule, ces cellules sont chargées à partir d'une tension sensiblement égale à 0 Volt, ce qui assure une recharge équilibrée.

Le module d'alimentation auxiliaire 51 comprend un transformateur tel qu'un transformateur de type flyback, non représenté.

Ce module d'alimentation électrique auxiliaire 51 cesse de fonctionner lorsque le seuil bas de tension Einf est atteint.

Comme illustré sur la figure 8, le module de décharge accélérée 52 comporte un transistor MOSFET canal N à appauvrissement 53. Ce transistor MOSFET 53 est par exemple un transistor de modèle BSP149 commercialisé par la société INFINEON.

Le module de décharge accélérée 52 comporte en outre une pompe à diodes 55 reliée au transistor 53 de manière à permettre, lorsque le module d'alimentation auxiliaire 51 et l'oscillateur 20 cessent de fonctionner (l'intensité du courant Ia étant proche de 0 mA), de rendre ce transistor 53 conducteur (la tension de la grille de ce transistor 53 passant à 0 Volt).

Le courant Iaux peut alors atteindre environ 45 mA par exemple, en début de phase Ph2, et décroître ensuite jusqu'à environ 0 mA en fin de phase Ph2.

Le module de décharge accélérée 52 comporte en outre au moins une résistance 56 reliée aux cellules Ci à l'issue de la deuxième phase Ph2 et agencée pour empêcher une recharge éventuelle par effet électrochimique des cellules de stockage d'énergie.

Le circuit d'équilibrage 10' est agencé de manière à ce que la décharge de la deuxième phase est désactivée lorsque la tension E aux bornes de l'ensemble 2 des cellules devient supérieure à un seuil haut de tension Esup, par exemple d'environ 7 Volts.

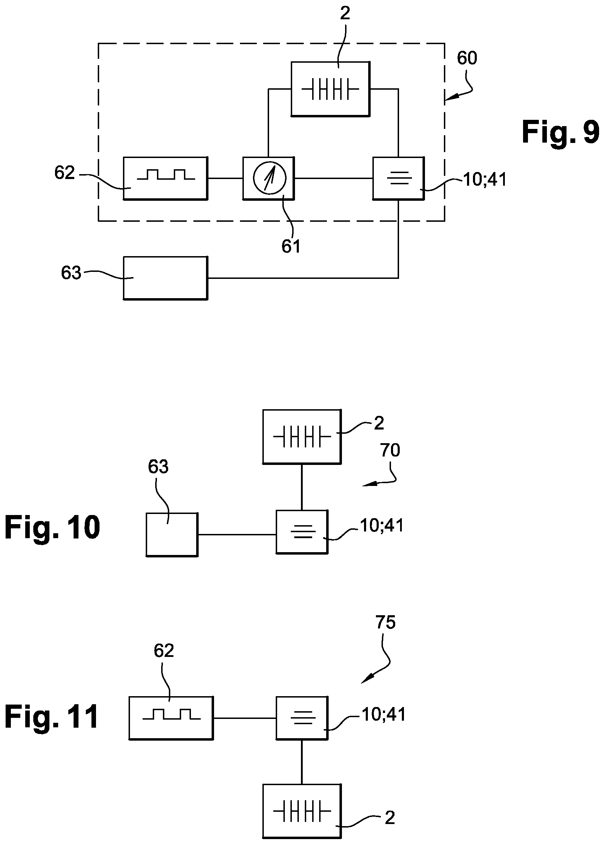

On a représenté sur la figure 9 un dispositif de stockage d'énergie 60 conforme à un autre exemple de mise en oeuvre de l'invention, comportant :

- un ensemble 2 de cellules de stockage d'énergie Ci connectées en série,
- un circuit d'équilibrage 10 ; 41 agencé pour permettre un équilibrage des cellules lors d'une décharge de celles-ci, en faisant circuler un ou plusieurs courants d'équilibrage Isi dans une ou plusieurs cellules de l'ensemble, comme décrit plus haut,
- un système de diagnostic 61 agencé pour permettre de délivrer au moins une information associée à l'une au moins des cellules de l'ensemble 2.

Le circuit d'équilibrage 10 ; 41 est agencé pour contrôler le ou les courants d'équilibrage Isi au moins en fonction d'une information externe indépendante de l'ensemble 2 des cellules de stockage d'énergie et/ ou d'une information associée à l'une au moins des cellules, délivrée par le système de diagnostic 61.

Le système de diagnostic 61 est relié à un oscillateur 62 agencé pour commander sa mise en marche.

L'oscillateur 62 est agencé pour provoquer à intervalle de temps régulier, par exemple toutes les heures, le déclenchement du système de diagnostic 61, lorsque le véhicule est à l'arrêt, par exemple en cas de parking prolongé.

L'oscillateur 62 est à faible consommation électrique de manière à ce que l'énergie consommée pour l'équilibrage soit la plus faible possible.

Le circuit d'équilibrage 10 ; 41 est relié à un module 63 du véhicule, par exemple un système contrôle moteur ou un ordinateur de bord, agencé pour commander le circuit d'équilibrage 10 ; 41 en fonction d'informations externes au dispositif 60.

Les informations externes sont choisies parmi : une information de tension d'une batterie d'alimentation du réseau de bord du véhicule, une information délivrée par un système de gestion de la batterie (BMS), une information de réveil du circuit d'équilibrage délivrée notamment par un système de contrôle moteur ou un ordinateur de bord, une information liée à la détection d'une clé de contact en position +APC « après contact ».

En fonction d'informations externes traitées par le module 63, le circuit d'équilibrage 10 ; 41 bascule entre deux modes, un premier mode dans lequel l'équilibrage des cellules de stockage d'énergie est accompagné d'un ou de courants d'équilibrage faibles lorsque le véhicule est à l'arrêt, et un deuxième mode dans lequel l'équilibrage des cellules est accompagné d'un ou de courants d'équilibrage forts lorsque le véhicule est en marche.

Le circuit d'équilibrage 10 ; 41 bascule du premier mode au deuxième mode lorsque la tension aux bornes d'une batterie du véhicule ou aux bornes de l'ensemble 2 des cellules dépasse un seuil prédéterminé, par exemple égal à 12 ou 13 Volts.

L'arrêt du circuit d'équilibrage 10 ; 41 est provoqué, dans l'exemple décrit, par le système de diagnostic 61 lorsque celui-ci détecte un état satisfaisant des cellules en termes d'équilibrage.

Le système de diagnostic 61 est agencé pour délivrer une information choisie parmi : une information de température associée à l'une au moins des cellules Ci, une information de tension associée à l'une des cellules, une information de tension associée à plusieurs cellules de l'ensemble, une information de tension aux bornes de l'ensemble lui-même.

Dans l'exemple qui vient décrit, le dispositif comprend un oscillateur 62 et est relié à un module externe 63.

On ne sort pas du cadre de la présente invention lorsque le dispositif est dépourvu d'oscillateur 62.

Par exemple, on a illustré sur la figure 10 un dispositif 70 comportant un circuit d'équilibrage 10 ; 41 directement contrôlé par un module externe 63.

Dans le but de limiter les consommations à l'arrêt du véhicule, le module externe 63 peut être agencé pour réveiller le circuit d'équilibrage, ce qui peut permettre d'éviter d'avoir un oscillateur associé au circuit d'équilibrage lui-même.

On a représenté sur la figure 11 un dispositif 75 conforme à un autre exemple de mise en oeuvre de l'invention, comportant un circuit d'équilibrage contrôlé par un oscillateur 62, sans utilisation d'informations externes.

Le réveil et l'arrêt du circuit d'équilibrage 10 ; 41 sont commandés uniquement par l'oscillateur 62.

Par exemple, le circuit d'équilibrage 10 ; 41 fonctionne 10 minutes toutes les heures ou, en variante, une heure tous les jours, lorsque le véhicule est à l'arrêt, en position de parking.

Toujours dans le but de minimiser la consommation d'énergie, il est possible de faire fonctionner le circuit d'équilibrage seulement lorsque celui-ci est efficace, notamment lorsque les tensions des cellules sont fortement différentes. Le reste du temps, il est préférable de laisser le circuit d'équilibrage inactif et de le remettre en fonctionnement le moment adapté. Le temps entre deux réveils successifs est notamment lié au comportement des cellules de stockage d'énergie en fonction du temps et de la rapidité du circuit d'équilibrage.

Une fois le temps entre deux réveils choisi, le temps de réveil peut être lié aux cellules de stockage d'énergie elles-mêmes et à la difficulté de les équilibrer. Cette valeur du temps de réveil peut être utilisée pour informer sur une dérive de certaines cellules pour caractériser leur fin de vie.

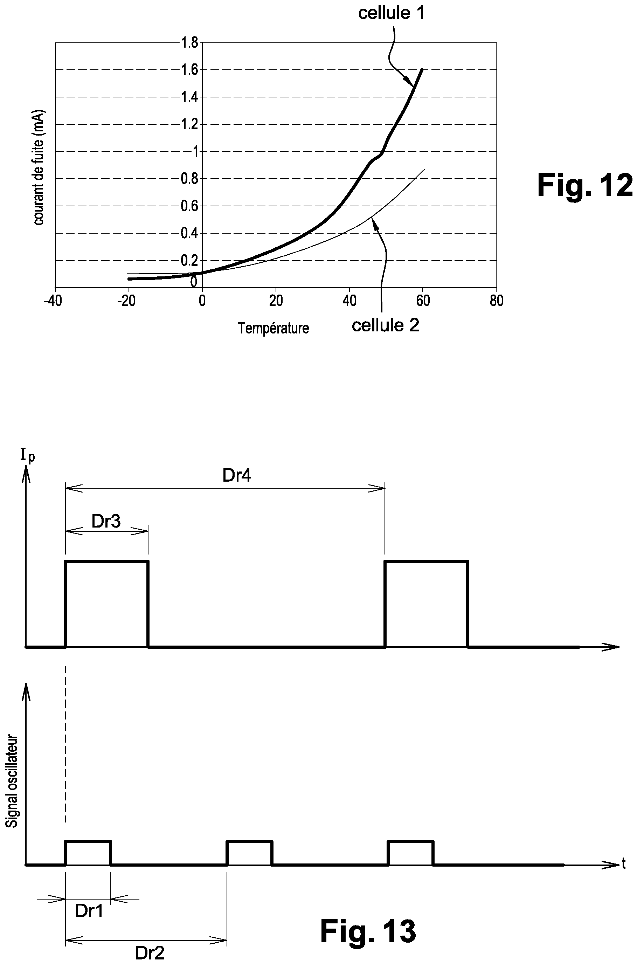

Comme illustré sur la figure 12, les courants de fuite des cellules Ci dépendent de la température.

La différence entre courants de fuite de deux cellules peut augmenter avec l'élévation de la température.

Par conséquent, à des températures relativement élevées au-delà d'un seuil, par exemple au-delà de 40°C, le circuit d'équilibrage 10; 41 est commandé pour fonctionner en vue d'équilibrer les cellules.

Le circuit d'équilibrage peut être arrêté, si on le souhaite, lorsque la température repasse en dessous de 40°C.

La figure 13 représente l'évolution du courant Ip en fonction du temps, ainsi que celle des signaux de réveil de l'équilibrage, par exemple pour le dispositif 60 décrit en référence à la figure 9.

Le circuit d'équilibrage 10 ; 41 est agencé pour permettre de faire varier l'intensité du ou des courants d'équilibrage en fonction de l'état de vieillissement de la ou des cellules Ci, notamment d'au moins l'une des informations suivantes : une valeur de la résistance interne de la ou des cellules de stockage d'énergie Ci (*ESR ou Equivalent Serie Resistance*), une valeur de capacité de la ou des cellules de stockage d'énergie, l'état de charge d'une ou de plusieurs cellules (SOC ou *State of Charge),* l'état d'énergie d'une ou de plusieurs cellules (SOE ou *State of Energy*).

La durée Dr2 entre deux signaux de réveil de l'équilibrage, et éventuellement la durée d'une phase d'équilibrage Dr3, sont choisie en fonction de l'état de vieillissement de la ou des cellules Ci, notamment d'au moins l'une des informations suivantes : une valeur de la résistance interne de la ou des cellules de stockage d'énergie (*ESR ou Equivalent Serie Resistance*), une valeur de capacité de la ou des cellules de stockage d'énergie, l'état de charge d'une ou de plusieurs cellules (SOC ou *State of Charge*), l'état d'énergie d'une ou de plusieurs cellules (SOE ou *State of Energy*).

L'équilibrage étant réalisé de manière intermittente, la durée Dr3 d'une phase d'équilibrage et/ou la durée Dr4 entre deux déclenchements successifs de l'équilibrage sont liées à l'état de vieillissement de la ou des cellules Ci, notamment d'au moins l'une des informations suivantes : une valeur de la résistance interne de la ou des cellules de stockage d'énergie (*ESR ou Equivalent Serie Resistance*), une valeur de capacité de la ou des cellules de stockage d'énergie, l'état de charge d'une ou de plusieurs cellules (SOC ou *State of Charge),* l'état d'énergie d'une ou de plusieurs cellules (SOE ou *State of Energy*).

La durée Dr2 est par exemple d'une heure environ, et la durée Dr1 du signal de réveil de l'équilibrage est par exemple de 100 ms environ.

La phase d'équilibrage de durée Dr3 est déclenchée avantageusement en fonction de l'écart de tension entre des cellules de stockage d'énergie Ci.

L'optimisation des rapports Dr1/Dr2 et Dr3/Dr4 et de l'intensité Ip permet, d'une part, de minimiser l'autodécharge de l'ensemble de cellules Ci pour optimiser le taux de disponibilité de l'ensemble de cellules Ci en fonction du profil d'utilisation et de son état de vieillissement, et d'autre part, d'avoir une image de l'état de santé de l'ensemble de cellules Ci qui peut être utilisée dans une stratégie prédictive de fin de vie de l'ensemble de cellules Ci.

Une cartographie du vieillissement de l'ensemble de cellules Ci et/ou un système d'auto-apprentissage peuvent être utilisés pour optimiser les paramètres de l'équilibrage.

Le dispositif 60 est agencé pour délivrer une information de fin de vie de la ou des cellules de stockage d'énergie Ci, notamment sous la forme d'un signal d'avertissement, en fonction de l'un au moins de la fréquence d'activation du circuit d'équilibrage et l'intensité du ou des courants d'équilibrage.

Par exemple, lorsque la durée Dr4 est égale ou inférieure à un seuil temporel prédéterminé, notamment choisi égal à 24 heures, et/ou lorsque le courant Ip est supérieur à un seuil de courant prédéterminé, notamment choisi égal à 50 mA, l'information de fin de vie de la ou des cellules de stockage d'énergie Ci est délivrée.

**Revendications**

1. Dispositif de stockage d'énergie pour véhicule automobile comportant :

   - un ensemble (2) de cellules de stockage d'énergie (Ci) connectées en série,
   - un circuit d'équilibrage agencé pour permettre un équilibrage des cellules (Ci) lors d'une décharge de celles-ci, en faisant circuler un ou plusieurs courants d'équilibrage dans une ou plusieurs cellules de l'ensemble (2),
   - un système de diagnostic (61) agencé pour permettre de délivrer au moins une information associée à l'une au moins des cellules de l'ensemble,
   - le circuit d'équilibrage étant agencé pour contrôler le ou les courants d'équilibrage et/ou la durée d'équilibrage (Dr3) au moins en fonction d'une information externe indépendante de l'ensemble des cellules de stockage d'énergie et/ou d'une information associée à l'une au moins des cellules, délivrée par le système de diagnostic le dispositif étant **caractérisé par le fait qu'**il est agencé pour délivrer une information de fin de vie de la ou des cellules de stockage d'énergie, notamment sous la forme d'un signal d'avertissement, en fonction d'au moins une fréquence d'activation du circuit d'équilibrage et de l'intensité du ou des courants d'équilibrage.

2. Dispositif selon la revendication précédente, **caractérisé par le fait que** le système de diagnostic est agencé pour délivrer une information choisie parmi :

une information de température associée à l'une au moins des cellules, une information de tension associée à l'une des cellules, une information de tension associée à plusieurs cellules de l'ensemble, une information de tension aux bornes de l'ensemble lui-même.

3. Dispositif selon la revendication précédente, **caractérisé par le fait que** le circuit d'équilibrage est agencé pour permettre de faire varier l'intensité du ou des courants d'équilibrage de 0 Ampère à une valeur maximale prédéterminée.

4. Dispositif selon l'une quelconque des revendications précédentes, **caractérisé par le fait que** le circuit d'équilibrage (10 ; 41) est maintenu en fonctionnement tant que la température associée à l'une au moins des cellules est supérieure à un seuil prédéterminé, notamment un seuil égal à environ 40°C.

5. Dispositif selon l'une quelconque des revendications précédentes, **caractérisé par le fait que** le système de diagnostic (61) est agencé pour commander la mise en marche et/ ou l'interruption du circuit d'équilibrage.

6. Dispositif selon l'une quelconque des revendications précédentes, **caractérisé par le fait que** l'information externe est choisie parmi : une information de tension d'une batterie d'alimentation du réseau de bord du véhicule, une information délivrée par un système de gestion de la batterie (BMS), une information de réveil du circuit d'équilibrage délivrée notamment par un système de contrôle moteur ou un ordinateur de bord, une information de l'alimentation du réseau de bord par détection de la clé de contact en position +APC « après contact ».

7. Dispositif selon l'une quelconque des revendications précédentes, **caractérisé par le fait que** le circuit d'équilibrage est agencé pour pouvoir fonctionner suivant deux modes, un premier mode dans lequel l'équilibrage des cellules de stockage d'énergie est accompagné d'un ou de courants d'équilibrage faibles notamment lorsque le véhicule est à l'arrêt, et un deuxième mode dans lequel l'équilibrage des cellules est accompagné d'un ou de courants d'équilibrage forts notamment lorsque le véhicule est en marche.

8. Dispositif selon la revendication précédente, **caractérisé par le fait que** le circuit d'équilibrage bascule du premier mode au deuxième mode lorsque la tension aux bornes d'une batterie du véhicule ou aux bornes de l'ensemble des cellules dépasse un seuil prédéterminé, par exemple un seuil égal à 12 ou 13 Volts.

**9.** Dispositif selon l'une quelconque des revendications précédentes, **caractérisé par le fait qu'**il comporte un oscillateur (62) agencé pour commander la mise en marche et/ ou l'interruption du circuit d'équilibrage de manière intermittente, notamment via le système de diagnostic (61).

**10.** Dispositif selon la revendication précédente, **caractérisé par le fait que** l'oscillateur (62) est agencé pour commander la mise en marche et l'interruption du système de diagnostic (61).

**11.** Dispositif selon la revendication 9, **caractérisé par le fait que** l'oscillateur commande directement le circuit d'équilibrage.

**12.** Dispositif selon l'une quelconque des revendications 9 à 11, **caractérisé par le fait que** le circuit d'équilibrage est agencé pour fonctionner pendant une durée prédéterminée après sa mise en marche par l'oscillateur (62), puis le cas échéant se mettre à l'arrêt après cette durée prédéterminée.

**13.** Dispositif selon l'une quelconque des revendications précédentes, **caractérisé par le fait que** le circuit d'équilibrage comporte un ou plusieurs transformateurs de type flyback.

**14.** Dispositif selon l'une quelconque des revendications précédentes, **caractérisé par le fait que** le circuit d'équilibrage est agencé pour permettre de faire varier l'intensité du ou des courants d'équilibrage en fonction de l'état de vieillissement de la ou des cellules, notamment d'au moins l'une des informations suivantes : une valeur de la résistance interne de la ou des cellules de stockage d'énergie (ESR *ou Equivalent Serie Resistance*), une valeur de capacité de la ou des cellules de stockage d'énergie, l'état de charge d'une ou de plusieurs cellules (SOC ou *State of Charge),* l'état d'énergie d'une ou de plusieurs cellules (SOE ou *State of Energy*).

**15.** Dispositif selon l'une quelconque des revendications précédentes, l'équilibrage étant réalisé de manière intermittente, **caractérisé par le fait que** la durée (Dr3) d'une phase d'équilibrage et/ou la durée (Dr4) entre deux déclenchements successifs de l'équilibrage sont liées à l'état de vieillissement de la ou des cellules, notamment d'au moins l'une des informations suivantes : une valeur de la résistance interne de la ou des cellules de stockage d'énergie (*ESR ou Equivalent Serie Resistance*), une valeur de capacité de la ou des cellules de stockage d'énergie, l'état de charge d'une ou de plusieurs cellules (SOC ou *State of Charge*), l'état d'énergie d'une ou de plusieurs cellules (SOE ou *State of Energy*).

**Patentansprüche**

**1.** Energiespeichervorrichtung für Kraftfahrzeug, die Folgendes umfasst:

- eine Anordnung (2) von Energiespeicherzellen (Ci), die in Reihe geschaltet sind,
- eine Ausgleichsschaltung, die dafür ausgelegt ist, einen Ausgleich der Zellen (Ci) während ihrer Entladung zu ermöglichen, indem bewirkt wird, dass in einer oder in mehreren Zellen der Anordnung (2) ein oder mehrere Ausgleichsströme fließen,
- ein Diagnosesystem (61), das dafür ausgelegt ist, die Ausgabe wenigstens einer Information, die wenigstens einer der Zellen der Anordnung zugeordnet ist, zu ermöglichen,
- wobei die Ausgleichsschaltung dafür ausgelegt ist, den oder die Ausgleichsströme und/oder die Ausgleichsdauer (Dr3) wenigstens als Funktion einer von der Anordnung der Energiespeicherzellen unabhängigen externen Information und/oder einer wenigstens einer der Zellen zugeordneten Information, die von dem Diagnosesystem ausgegeben wird, zu steuern, wobei die Vorrichtung **dadurch gekennzeichnet ist, dass** sie dafür ausgelegt ist, eine Information über das Ende der Lebensdauer der einen oder der mehreren Energiespeicherzellen insbesondere in Form eines Warnsignals als Funktion wenigstens einer Aktivierungshäufigkeit der Ausgleichsschaltung und der Stärke des einen oder der mehreren Ausgleichsströme auszugeben.

**2.** Vorrichtung nach dem vorhergehenden Anspruch, **dadurch gekennzeichnet, dass** das Diagnosesystem dafür ausgelegt ist, eine Information auszugeben, die gewählt ist aus: einer Temperaturinformation, die wenigstens einer der Zellen zugeordnet ist, einer Spannungsinformation, die einer der Zellen zugeordnet ist, einer Spannungsinformation, die mehreren Zellen der Anordnung zugeordnet ist, und einer Spannungsinformation an den Anschlüssen der Anordnung selbst.

**3.** Vorrichtung nach dem vorhergehenden Anspruch, **dadurch gekennzeichnet, dass** die Ausgleichsschaltung dafür ausgelegt ist, die Änderung der Stärke des einen oder der mehreren Ausgleichsströme von 0 Ampere bis zu einem vorgegebenen Maximalwert zu ermöglichen.

**4.** Vorrichtung nach einem der vorhergehenden Ansprüche, **dadurch gekennzeichnet, dass** die Ausgleichsschaltung (10; 41) in Betrieb gehalten wird, während die wenigstens einer der Zellen zugeordnete Temperatur höher als ein vorgegebener Schwellenwert ist, wobei der Schwellenwert insbesondere gleich etwa 40 °C ist.

**5.** Vorrichtung nach einem der vorhergehenden Ansprüche, **dadurch gekennzeichnet, dass** das Diagnosesystem (61) dafür ausgelegt ist, die Inbetriebnahme und/oder die Unterbrechung der Ausgleichsschaltung zu steuern.

**6.** Vorrichtung nach einem der vorhergehenden Ansprüche, **dadurch gekennzeichnet, dass** die externe Information gewählt ist aus: einer Spannungsinformation einer Batterie für die Versorgung des Bordnetzes des Fahrzeugs, einer Information, die von einem Steuersystem der Batterie (BMS) ausgegeben wird, einer Information zum Aufwecken der Ausgleichsschaltung, die insbesondere von einem Motorsteuersystem oder einem Bordcomputer ausgegeben wird, und einer Information über die Versorgung des Bordnetzes durch Detektion des Zündschlüssels in der Position +APC "nach Kontakt".

**7.** Vorrichtung nach einem der vorhergehenden Ansprüche, **dadurch gekennzeichnet, dass** die Ausgleichsschaltung dafür ausgelegt ist, in zwei Betriebsarten arbeiten zu können, wobei in einer ersten Betriebsart, insbesondere dann, wenn das Fahrzeug in Ruhe ist, der Ausgleich der Energiespeicherzellen von einem oder mehreren schwachen Ausgleichsströmen begleitet wird und einer zweiten Betriebsart, insbesondere dann, wenn das Fahrzeug fährt, der Ausgleich der Zellen von einem oder mehreren starken Ausgleichsströmen begleitet wird.

**8.** Vorrichtung nach dem vorhergehenden Anspruch, **dadurch gekennzeichnet, dass** die Ausgleichsschaltung von der ersten Betriebsart zur zweiten Betriebsart wechselt, wenn die Spannung an den Anschlüssen einer Fahrzeugbatterie oder an den Anschlüssen der Anordnung der Zellen einen vorgegebenen Schwellenwert überschreitet, beispielsweise einen Schwellenwert, der gleich 12 oder 13 Volt ist.

**9.** Vorrichtung nach einem der vorhergehenden Ansprüche, **dadurch gekennzeichnet, dass** sie einen Oszillator (62) umfasst, der dafür ausgelegt ist, die Inbetriebnahme und/oder die Unterbrechung der Ausgleichsschaltung intermittierend, insbesondere über das Diagnosesystem (61), zu steuern.

**10.** Vorrichtung nach dem vorhergehenden Anspruch, **dadurch gekennzeichnet, dass** der Oszillator (62) dafür ausgelegt ist, die Inbetriebnahme und die Unterbrechung des Diagnosesystems (61) zu steuern.

**11.** Vorrichtung nach Anspruch 9, **dadurch gekennzeichnet, dass** der Oszillator die Ausgleichsschaltung direkt steuert.

**12.** Vorrichtung nach einem der Ansprüche 9 bis 11, **dadurch gekennzeichnet, dass** die Ausgleichsschaltung dafür ausgelegt ist, während einer vorgegebenen Dauer nach ihrer Inbetriebnahme durch den Oszillator (62) zu arbeiten und dann nach dieser vorgegebenen Dauer gegebenenfalls anzuhalten.

**13.** Vorrichtung nach einem der vorhergehenden Ansprüche, **dadurch gekennzeichnet, dass** die Ausgleichsschaltung einen oder mehrere Transformatoren des Flyback-Typs umfasst.

**14.** Vorrichtung nach einem der vorhergehenden Ansprüche, **dadurch gekennzeichnet, dass** die Ausgleichsschaltung dafür ausgelegt ist, die Änderung der Stärke des einen oder der mehreren Ausgleichsströme als Funktion des Alterungszustands der einen oder der mehreren Zellen zu ermöglichen, insbesondere als Funktion wenigstens einer der folgenden Informationen: Wert des inneren Widerstandes der einen oder der mehreren Energiespeicherzellen (ESR oder Equivalent Series Resistance), Kapazitätswert der einen oder der mehreren Energiespeicherzellen, Ladezustand einer oder mehreren Zellen (SOC oder State of Charge), Energiezustand einer oder mehreren Zellen (SOE oder State of Energy).

**15.** Vorrichtung nach einem der vorhergehenden Ansprüche, wobei der Ausgleich intermittierend erfolgt, **dadurch gekennzeichnet, dass** die Dauer (Dr3) einer Ausgleichsphase und/oder die Dauer (Dr4) zwischen zwei aufeinander folgenden Auslösungen des Ausgleichs mit dem Alterungszustand der einen oder der mehreren Zellen in Beziehung stehen, insbesondere mit wenigstens einer der folgenden Informationen: Wert des inneren Widerstandes der einen oder der mehreren Energiespeicherzellen (ESR oder Equivalent Series Resistance), Kapazitätswert der einen oder der mehreren Energiespeicherzellen, Ladezustand einer oder mehrerer Zellen (SOC oder State of Charge), Energiezustand einer oder mehrerer Zellen (SOE oder State of Energy).

**Claims**

**1.** Energy storage device for a motor vehicle including:

- an assembly (2) of energy storage cells (Ci) connected in series;
- a balancing circuit arranged to balance the cells (Ci) while they are being discharged by passing one or more balancing currents through one or more cells of the assembly (2);
- a diagnostic system (61) arranged to allow at least one item of information associated with at least one of the cells of the assembly to be delivered;

- the balancing circuit being arranged to control the one or more balancing currents and/or the balancing duration (Dr3) at least according to an external item of information independent of the assembly of the energy storage cells and/or an item of information associated with at least one of the cells, delivered by the diagnostic system, the device being **characterized in that** it is arranged to deliver information on the end of life of the one or more energy storage cells, in particular in the form of a warning signal, according to at least one activation frequency of the balancing circuit and the intensity of the one or more balancing currents.

2. Device according to the preceding claim, **characterized in that** the diagnostic system is arranged to deliver an item of information chosen from: temperature information associated with at least one of the cells, voltage information associated with one of the cells, voltage information associated with a plurality of cells of the assembly, and information on the voltage across the terminals of the assembly itself.

3. Device according to the preceding claim, **characterized in that** the balancing circuit is arranged to allow the intensity of the one or more balancing currents to be made to vary from 0 amperes to a predetermined maximum value.

4. Device according to any one of the preceding claims, **characterized in that** the balancing circuit (10; 41) is kept in operation as long as the temperature associated with at least one of the cells is higher than a predetermined threshold, in particular a threshold equal to about 40°C.

5. Device according to any one of the preceding claims, **characterized in that** the diagnostic system (61) is arranged to control the activation and/or the deactivation of the balancing circuit.

6. Device according to any one of the preceding claims, **characterized in that** the external item of information is chosen from: information on the voltage of a power supply battery of the on-board network of the vehicle, information delivered by a battery management system (BMS), information on the wakeup of the balancing circuit delivered in particular by an engine monitoring system or an on-board computer, and information on the supply of power to the on-board network by detecting the ignition key in the +APC "after contact" position.

7. Device according to any one of the preceding claims, **characterized in that** the balancing circuit is arranged to be able to operate in two modes, a first mode in which the balancing of the energy storage cells is accompanied by one or more weak balancing currents, in particular when the vehicle is at standstill, and a second mode in which the balancing of the cells is accompanied by one or more strong balancing currents, in particular when the vehicle is driving.

8. Device according to the preceding claim, **characterized in that** the balancing circuit switches from the first mode to the second mode when the voltage across the terminals of a battery of the vehicle or across the terminals of the assembly of the cells exceeds a predetermined threshold, for example a threshold equal to 12 or 13 volts.

9. Device according to any one of the preceding claims, **characterized in that** it includes an oscillator (62) arranged to control the activation and/or the deactivation of the balancing circuit intermittently, in particular via the diagnostic system (61).

10. Device according to the preceding claim, **characterized in that** the oscillator (62) is arranged to control the activation and the deactivation of the diagnostic system (61).

11. Device according to Claim 9, **characterized in that** the oscillator directly controls the balancing circuit.

12. Device according to any one of Claims 9 to 11, **characterized in that** the balancing circuit is arranged to operate for a predetermined duration after being activated by the oscillator (62), then, if appropriate, to shut down after this predetermined duration.

13. Device according to any one of the preceding claims, **characterized in that** the balancing circuit includes one or more flyback transformers.

14. Device according to any one of the preceding claims, **characterized in that** the balancing circuit is arranged to allow the intensity of the one or more balancing currents to be made to vary according to the state of ageing of the one or more cells, in particular according to at least one of the following items of information: a value of the internal resistance of the one or more energy storage cells (ESR or equivalent series resistance), a value of the capacity of the one or more energy storage cells, the state of charge of one or more cells (SOC or state of charge), and the state of energy of one or more cells (SOE or state of energy).

15. Device according to any one of the preceding claims, the balancing being carried out intermittently, **characterized in that** the duration (Dr3) of a balancing phase and/or the duration (Dr4) between two successive triggerings of the balancing operation are related to the state of ageing of the one or more cells, in particular according to at least one of the following items of information: a value of the internal resistance of the one or more energy storage cells (ESR or equivalent series resistance), a value of the capacity of the one or more energy storage cells, the state of charge of one or more cells (SOC or state of charge), and the state of energy of one or more cells (SOE or state of energy).

EP 2 137 801 B1

Fig. 1

Fig. 2

Fig. 3

Fig. 4

Fig. 5

**Fig. 6**

**Fig. 7**

**Fig. 8**

Fig. 9

Fig. 10

Fig. 11

cellule 1

Fig. 12

Fig. 13

## RÉFÉRENCES CITÉES DANS LA DESCRIPTION

**Documents brevets cités dans la description**

- US 20030214267 A
- US 5659237 A
- US 20050269988 A
- US 6771045 B
- US 6150795 A
- US 5594320 A